# EUROPÄISCHE PATENTSCHRIFT

(11) **EP 1 532 068 B1**
(45) Veröffentlichungstag und Bekanntmachung des Hinweises auf die Patenterteilung: **28.12.2011**
(21) Anmeldenummer: 03792159.0
(22) Anmeldetag: 17.06.2003
(51) Int. Cl.: B68G 7/05

(54) **VORRICHTUNG ZUM MONTIEREN VON SITZBEZÜGEN**
DEVICE FOR MOUNTING SEAT COVERS
DISPOSITIF PERMETTANT DE MONTER DES HOUSSES DE SIEGE

(30) Priorität: 22.08.2002 DE 10238400
(43) Veröffentlichungstag der Anmeldung: 25.05.2005
(73) Patentinhaber: Gottlieb Binder GmbH & Co. KG, 71088 Holzgerlingen (DE)
(72) Erfinder: NÄGELE, Klaus, 78727 Oberndorf (DE)
(74) Vertreter: Bartels, Martin Erich Arthur
(86) Internationale Anmeldenummer: PCT/EP2003/006362
(87) Internationale Veröffentlichungsnummer: WO 2004/018347

(56) Entgegenhaltungen:
- DE-A- 2 259 440
- US-A1- 2002 108 222

## Beschreibung

Die Erfindung betrifft eine Vorrichtung zum Montieren von Sitzbezügen jedweder Art, an Schaumpolsterteilen eines Sitzes, insbesondere Fahrzeugsitzes gemäß der Merkmalsausgestaltung des Oberbegriffes des Patentanspruches 1.

Bei Fahrzeugsitzen, wozu auch Fluggastsitze gehören, hat man bei einer neueren Generation an Sitztechnologie die bisher üblichen Drahteinlege-und Abspannsysteme durch ein Profilbefestigungssystem ersetzt (vgl. hierzu beispielhaft DE 198 08 995 C1). Bei dieser neuen Generation von Profilbefestigungssystemen ist auf der Unterseite eines Sitzbezuges, der aus Stoff, Leder, Kunststoffmaterialien oder dergleichen bestehen kann, einzelne Profilleisten über Abnähfahnen mit dem Sitzbezug verbunden angeordnet. Die dahingehenden Profilleisten sind von ihrem Verlauf und ihrer Länge her an den Abspannnähten des Sitzbezuges orientiert. Die zuordenbaren Schaumpolsterteile des jeweiligen Sitzes, die zu beziehen sind, bestehen aus einem üblichen nachgiebigen Schaummaterial, beispielsweise PU-Schaum und das jeweilige Sitzteil mit seinem Schaumpolster weist auf seiner dem Sitzbezug zugewandten Seite kanalförmige Ausnehmungen auf, in die beispielsweise von Hand die jeweilige Profilleiste für einen Festlegevorgang des Sitzbezuges am Schaumpolsterteil einlegbar ist.

Das jeweils derart eingesetzte Profil weist randseitig Flankenteile auf und die dahingehenden Flankenteile untergreifen die Abschlußflanken des Schaumpolsterteiles, die eine kanalförmige Mittenausnehmung begrenzen, durch die das Profilteil in den dahingehenden Schaumkanal einsetzbar ist. Ein großer Vorteil der dahingehenden Profilbefestigungssysteme ist, dass bei verschlissenen Sitzbezügen oder Schaumpolsterteilen die dahingehenden Komponenten getauscht werden können, indem man das am Sitzbezug angeordnete Profilteil wiederum außer Eingriff bringt, mit dem im Schaumpolsterteil eingebrachten Kanal. Das jeweilige Einlegeprofil kann kostengünstig in der Art eines Extrusionsprofiles hergestellt sein, so dass sich die beschriebene Festlegelösung trotz der notwendigen Handmontagearbeit kostengünstig realisieren läßt.

Durch die US 2002/108222 A1 ist eine gattungsgemäße Vorrichtung zum Montieren von Sitzbezügen an Schaumpolsterteilen eines Sitzes bekannt mit Greifelementen, die in Betätigungsgruppen zusammengefasst der Aufnahme von am Sitzbezug angeordneten Profilleisten dienen und die mittels einer Positioniereinrichtung, die eine Relativbewegung zwischen Schaumpolsterteil und dem jeweiligen Greifelement erlaubt, die Profilleisten in kanalartige Ausnehmungen im Schaumpolsterteil zieht, um dergestalt den Sitzbezug am Schaumpolsterteil festzulegen. Obwohl die beschriebenen Montageschritte zumindest teilweise automatisch realisierbar sind, lässt, was der Erhalt von Zeitersparnis und Kostenvorteile bei der Montage anbelangt, die bekannte Lösung noch Wünsche offen.

Ausgehend von diesem Stand der Technik liegt der Erfindung die Aufgabe zugrunde, die bekannte Lösung dahingehend weiter zu verbessern, dass weitere Zeit- und Kostenvorteile zu erhalten sind. Eine dahingehende Aufgabe löst eine Vorrichtung mit den Merkmalen des Patentanspruches 1 in seiner Gesamtheit.

Gemäß dem Inhalt des kennzeichnenden Teils des Patentanspruches 1 ist bei der erfindungsgemäßen Vorrichtung vorgesehen, dass alle Greifelemente von einem gemeinsamen Rahmenteil der Positioniereinrichtung umfasst sind, das in einer linearen Bewegung mittels eines Linearantriebes in der Höhe veränderbar ist, dass die Positioniereinrichtung ein Auflageteil für die Auflage des Schaumpolsterteiles aufweist, die von den Greifelementen in einer abgesenkten Position durchgriffen und in einer angehobenen Stellung von den Greifelementen frei ist, und dass für die Einnahme der einzelnen Positionen des Auflageteiles ein weiterer Linearantrieb dient, der eine überlagerte Bewegung zum ersten Linearantrieb erlaubt. Mit der dahingehenden Vorrichtung ist im wesentlichen ein automatischer Einlegebetrieb der jeweiligen Profilleiste am Sitzbezug ermöglicht. So werden die Profilleisten, die an der Unterseite des jeweiligen Sitzbezuges angenäht sind, von Hand oder automatisch in die jeweiligen Aufnahmen der Greifelemente eingesetzt und dort festgehalten. Die dahingehenden Greifelemente durchgreifen dabei in der beschriebenen Festlegesituation Ausnehmungen im Schaumpolsterteil, die quer zu den angesprochenen kanalartigen Führungen für die jeweilige Profilleiste verlaufen. Durch eine Relativbewegung von Profilleiste und mithin Sitzbezug zu den kanalartigen Ausnehmungen des Schaumpolsterteiles, werden dann die Profilleisten im jeweiligen Schaumpolsterteil festgelegt, wobei der dahingehende Festlegevorgang vollautomatisch erfolgt. Sobald die jeweilige Profilleiste in dem zugeordneten Schaumkanal im Schaumpolsterteil eingebracht ist, läßt sich dann die randseitige Begrenzung des Sitzbezuges von Hand oder gegebenenfalls über weitere Handhabungsgeräte am Schaumpolsterteil durch entsprechendes Überziehen festlegen. Anschließend wird dann, das derart erhaltene, bezogene Schaumpolsterteil als Sitzteil von der Vorrichtung für die weitere Verwendung freigegeben.

Die erfindungsgemäße Vorrichtung kann für spezielle Sitzteile des jeweiligen Sitzes speziell adaptiert sein, beispielsweise für den Kopfstützenbereich, die Rückenlehne, das eigentliche Sitzteil sowie gegebenenfalls bei Fluggastsitzen in Form von Bein-, Fuß- oder Wadenauflagen.

Weitere vorteilhafte Ausführungsformen der erfindungsgemäßen Vorrichtung sind Gegenstand der Unteransprüche. Im folgenden wird die erfindungsgemäße Vorrichtung anhand eines Ausführungsbeispieles nach der Zeichnung näher erläutert. Dabei zeigen in prinzipieller und nicht maßstäblicher Darstellung die
- Fig. 1: in perspektivischer Ansicht die Gesamtvorrichtung im Ausgangszustand;
- Fig. 2: einen Einlegevorgang der Profilleiste eines Sitzbezuges in die zugeordneten Ausnehmungen der Greifelemente gemäß der Darstellung nach der Fig. 1;
- Fig. 3: die Entnahmeposition für ein fertig bezogenes Sitzteil in perspektivischer Ansicht, gemäß den Darstellungen nach den Fig. 1 und 2;
- Fig. 4: eine der Fig. 3 entsprechende Entnahmeposition für das bezogene Sitzteil ohne Darstellung desselben;
- Fig. 5: in perspektivischer Draufsicht eine Prinzipdarstellung, die ein . Schaumpolsterteil als Sitzteil zeigt, mit das Sitzteil durchgreifenden Greifelementen der Vorrichtung;
- Fig. 6: die Unteransicht auf einen Sitzbezug, mit in Längsrichtung und Querrichtung verlaufenden Profil leisten, die über Abnähfahnen mit dem Bezugstoff verbunden sind.

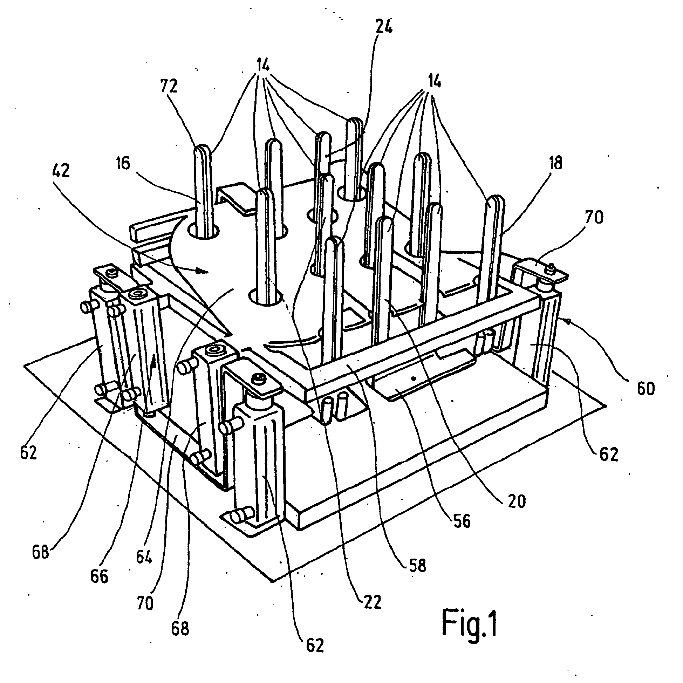

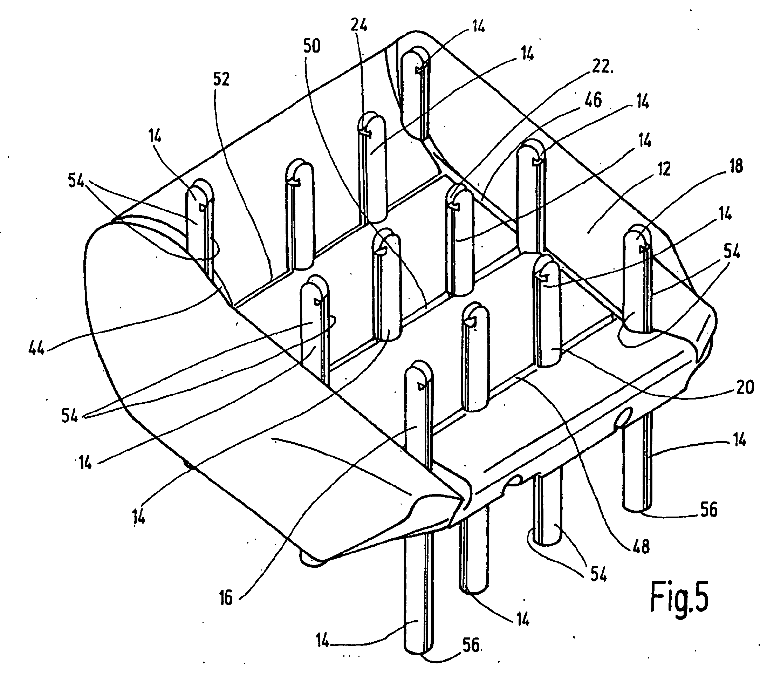

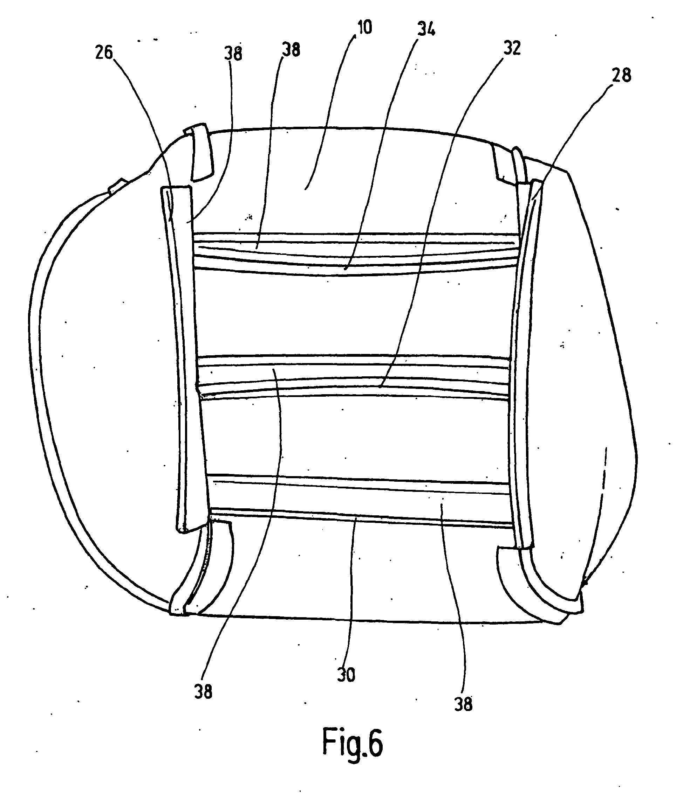

Die erfindungsgemäße Vorrichtung ist in der Fig. 1 in ihrem Ausgangszustand dargestellt. Die dahingehende Vorrichtung dient dem Montieren von Sitzbezügen jedweder Art, wobei beispielhaft ein dahingehender Sitzbezug in der Fig. 6 dargestellt ist, und zwar von seiner Unteransicht her. Dahingehende Sitzbezüge 10, die aus einem Stoff- oder Ledermaterial bestehen können, sowie gegebenenfalls aus Kunststoff, sind auf Schaumpolsterteilen 12 festzulegen (vgl. beispielsweise Fig. 5), um dergestalt ein Sitzteil für einen Fahrzeugsitz oder Fluggastsitz zu erhalten. Dahingehende Sitzteile können jedoch auch für Behandlungsstühle, beispielsweise im OP-Bereich oder dergleichen, eingesetzt werden.

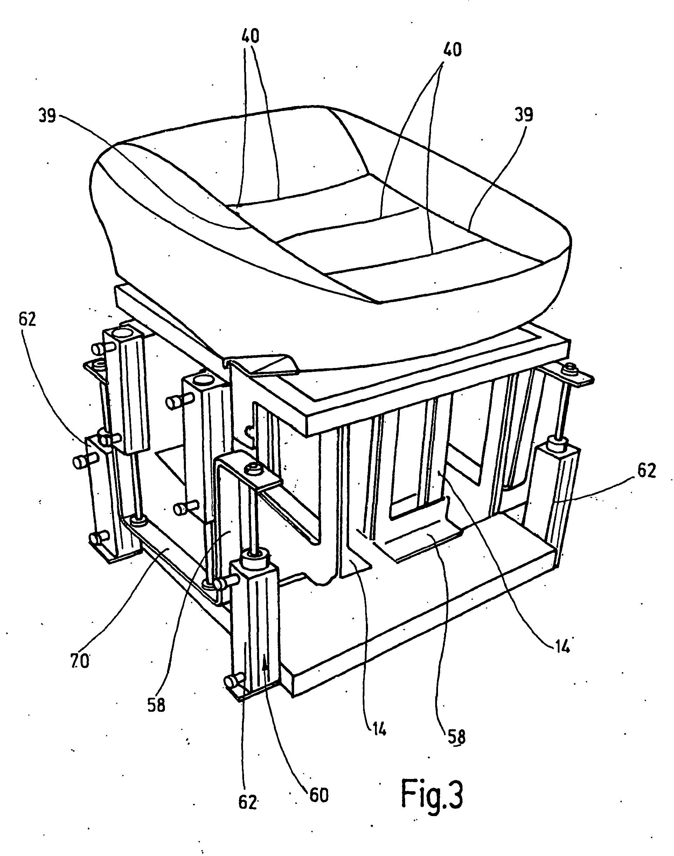

Das gezeigte Ausführungsbeispiel betrifft unmittelbar das Sitzteil eines Kraftfahrzeugsitzes; es lassen sich jedoch vergleichbar auch andere Sitzteile oder Sitzkomponenten derart beziehen, beispielsweise Kopfstützen, Rückenlehnen, Beinauflagen etc. Die erfindungsgemäße Vorrichtung weist eine Vielzahl von Greifelementen 14 auf, wobei im vorliegenden Fall für das Beziehen eines Sitzteiles zwölf Greifelemente 14 im Einsatz sind. Die dahingehenden zwölf Greifelemente 14 sind in fünf Betätigungsgruppen 16, 18, 20, 22 und 24 angeordnet und dergestalt zusammengefaßt. Die dahingehenden Greifelemente 14 dienen der Aufnahme, von am Sitzbezug angeordneten Profilleisten 26, 28, 30, 32 und 34, wobei die dahingehenden Profilleisten in der vorgegebenen Reihenfolge den jeweiligen Betätigungsgruppen an Greifelementen 14 zuordenbar sind. Die genannten Profilleisten sind über Abnähfahnen 38 der üblichen Art mit der Unterseite des Sitzbezuges 10 fest verbunden und bilden, mit ihren Längs- und Querrichtungen die entsprechenden Nahtstellen 39,40 auf der Oberseite des Sitzteiles (vgl. Fig. 3) aus.

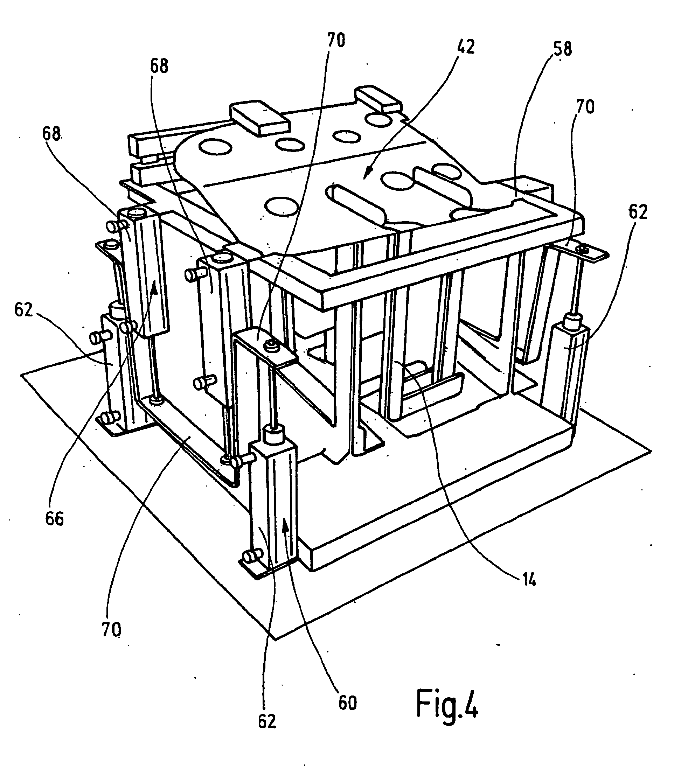

Die Vorrichtung weist des weiteren eine als Ganzes mit 42 bezeichnete Positioniereinrichtung auf, die, wie dies eine Gegenüberstellung der Figuren 1 und 4 deutlich macht, eine Relativbewegung zwischen Schaumpolsterteil 12 und dem jeweiligen Greifelement 14 erlaubt. Aufgabe der automatisierten Vorrichtung ist es, die einzelnen Profilleisten 26, 28, 30, 32, 34 in die zuordenbaren kanalartigen Ausnehmungen 44, 46, 48, 50 und 52 im Schaumkörperteil 12 zu ziehen. Dergestalt läßt sich dann der Sitzbezug 10 reversibel, also wieder lösbar am Schaumpolsterteil 12 festlegen, was im Folgenden noch näher gezeigt werden wird.

Wie insbesondere die Prinzipdarstellung nach der Fig. 5 zeigt, besteht das jeweilige Greifelement 14 aus einer.Art Greifzange, wobei diese jeweils zwei relativ zueinander bewegbare Zangenteile 54 aufweist. Die dahingehenden Zangenteile 54 ergeben sich durch einen Längsschlitz, der das jeweilige Greifelement 14 entlang seiner stabartigen Längsachse vollständig durchgreift. Für eine Zangenbewegung, also für einen Greifvorgang bei dem die Zangenteile 54 aufeinander zu und lösbar wieder voneinander weg bewegbar sind, dient ein nicht näher dargestellter Linearantrieb, beispielsweise in Form eines pneumatischen Stellmotores oder einer Lineareinheit, die die dahingehende Zustellbewegung ermöglicht. Vorzugsweise greift der dahingehende, nicht näher dargestellte Antrieb am Fußteil 56 (vgl. Fig. 5) eines jeden Greifelementes 14 an und sinnfälligerweise ist ein einzelner Antrieb einer Betätigungsgruppe 16, 18, 20, 22, 24 zugeordnet, so dass mit nur einem Antrieb für eine Betätigungsgruppe gemeinsam die Greif- oder Lösebewegung für dasjenige ansteuerbare Greifelement 14 erfolgt ist. Mithin ist eine zeitlich sequentielle Ansteuerung der einzelnen Betätigungsgruppe über den jeweiligen, nicht näher dargestellten, vorzugsweise pneumatischen Antrieb möglich.

Wie des weiteren die Fig. 1 und 3 zeigen, sind alle Greifelemente 14 an einem gemeinsamen Rahmenteil 58 angeordnet, das mittels eines ersten Linearantriebes 60 in der Höhe veränderbar ist. Der dahingehende erste Linearantrieb weist vier Arbeitszylinder 62 auf, die gemäß der Darstellung nach den Figuren an den Ecken der Vorrichtung angeordnet sind, und dergestalt die Greifelemente 14 zusammen mit dem Rahmenteil 58 außenumfangseitig umfassen. Mit der dahingehenden ersten Linearantriebseinheit 60 läßt sich das Rahmenteil 58, das die Greifelemente 14 außenumfangseitig umfasst, zu den in der Höhe stationär angeordneten Greifelementen 14 relativ verfahren. In diesem Zusammenhang wären auch Ausführungsformen denkbar, wo die Greifelemente 14 über einen nicht näher dargestellten Antrieb in der Höhe gegenüber dem Rahmenteil 58 relativ einstellbar wären. Bei der vorliegenden Ausführungsform sind jedoch die Greifelemente 14 in der Höhe stationär angeordnet und erlauben nur in einer Ebene quer dazu, die bereits beschriebene Greifbewegung.

Neben dem genannten Rahmenteil 58 weist die Positioniereinrichtung 42 ein Auflageteil 64 für die Auflage des Schaumkörperteiles 12 längs seiner Unterseite auf. Das dahingehende Auflageteil 64 weist Ausnehmungen auf, die von den Greifelementen 14 in einer abgesenkten Position des Auflageteiles 64 (vgl. beispielsweise Fig. 1) durchgriffen sind. Ferner sind diese Ausnehmungen in einer angehobenen Stellung von den Greifelementen 14 freigegeben (vgl. Fig. 4). Für die Einnahme der einzelnen Positionen des Auflageteiles 64 in der Form eines flächigen oder plattenartigen Auflagekörpers dient ein weiterer Linearantrieb 66 mit vier Arbeitszylindern 68, vorzugsweise pneumatisch angetrieben, wobei die dahingehenden vier Arbeitszylinder 68 paarweise gruppiert einander zugewandt auf einem U-förmigen Rahmenschenkel 70 angeordnet sind, der an seinen freien Enden mit der Oberseite der vier anderen Arbeitszylindern 62 in erbindung steht und der bei deren Ausfahrbewegung zusammen mit den vier weiteren Arbeitszylindern 68 in der Höhe angehoben wird. Dergestalt ergibt sich eine überlagerte Belegung, von dem einen Linearantrieb 60 mit dem weiteren Linearantrieb 66.

Des besseren Verständnisses wegen, wird im nachfolgenden ein Arbeitsablauf, sprich ein Montagevorgang mit der erfindungsgemäßen Vorrichtung wie folgt näher erläutert:

Zunächst befindet sich die erfindungsgemäße Vorrichtung in ihrer Grundposition gemäß der Darstellung nach der Fig. 1. In der dahingehenden Stellung sind alle Greifelemente 14 geschlossen, das heißt die beschriebenen Zangenteile 54 eines jeden Greifelementes 14 liegen im wesentlichen aneinander und die Kopfteile 72 am oberen freien Ende der Greifelemente 14 sind gleichfalls zusammengefahren. In der dahingehenden Grund- oder Ausgangsposition wird dann das Schaumpolsterteil 12 in Form eines üblichen Sitzteiles, das eine Art Sitzwanne ausbildet, auf die Greifelemente 14 aufgesetzt und diese durchgreifen kanalförmige Ausnehmungen im Schaumpolsterteil 12, die in vertikaler Ausrichtung quer zu den kanalartigen Ausnehmungen 44, 46, 48, 50 und 52 im Schaumpolsterteil 12 verlaufen. Die Unterseite des Schaumpolsterteiles 12 liegt dabei auf der Oberseite des plattenförmigen Auflageteiles 64 auf. Mittels der pneumatischen Steuerung werden dann die Greifelemente 14, beispielsweise über einen Fuß-, Handtaster oder dergleichen aufgesteuert, und die Zangenteile 54 eines jeden Greifelementes 14 fahren auseinander, so dass das Kopfteil 72 in eine Aufnahmeposition für jedes geöffnete Greifelement 14 gelangt.

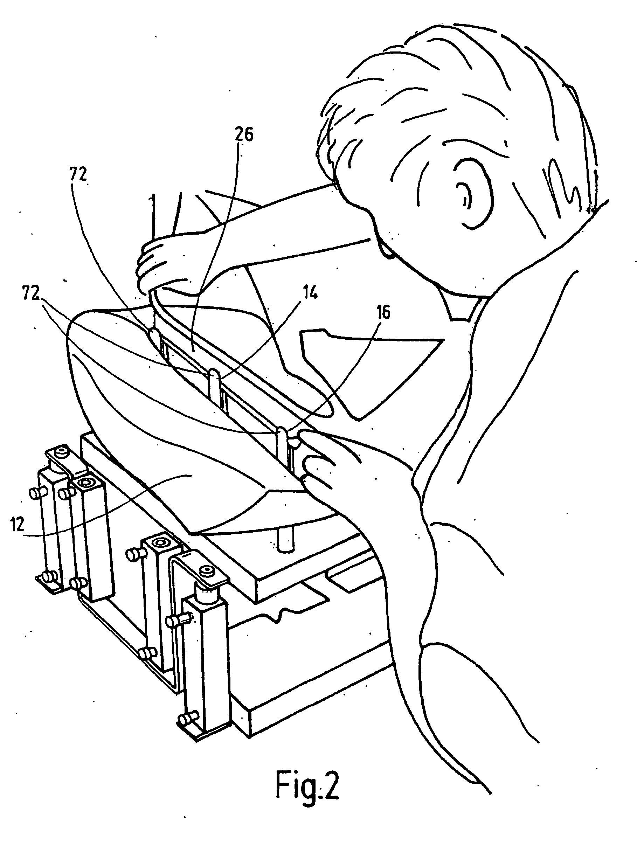

Gemäß der Darstellung nach der Fig. 2 kann dann von Hand oder über ein Handhabungssystem die erste Längsprofilleiste 26 in die erste Betätigungsgruppe 16 an Greifelementen 14 eingesetzt werden. Anschließend können die dahingehenden Greifelemente 14 der ersten Betätigungsgruppe 16 geschlossen werden. Vergleichbar werden dann die weiteren Profilleisten 28, 30, 32, 34 in die jeweils zugeordneten Betätigungsgruppen 18, 20, 22 oder 24 eingelegt und die Kopfteile 72 nehmen in vertikaler Richtung einen entsprechenden axialen Abstand zu der zugeordneten kanalförmigen Ausnehmung 44, 46, 48, 50, 52 im Schaumpolsterteil 12 ein. Vorzugsweise erfolgt das Einlegen für die Profil leisten in der Reihenfolge 34,32,30,26,28. Nach Abschluß der dahingehenden Einlegeprozedur und unter Voraussetzung, dass alle Greifelemente 14. geschlossen sind und die zugehörige Profilleiste umfassen, wird das Rahmenteil 58 zusammen mit dem Auflegeteil 64 über den ersten Linearantrieb 60 mit seinen vier Arbeitszylindern 62 nach oben angehoben, gemäß der Darstellung nach der Fig. 3. Die in vertikaler Richtung stationär angeordneten Greifelemente 14 ziehen bei der dahingehenden Aufwärtsbewegung dann die jeweilige Profilleiste 26, 28, 30, 32, 34 in den zugeordneten Kanal 44, 46, 48, 50, 52 im Schaumpolsterteil 12 und die dahingehenden Profilleisten verrasten in den zugeordneten Kanälen.

In der dahingehenden Einbausituation werden dann die Randteile des Sitzbezuges 10 über die zugeordneten Polsterteile, die das Schaumpolsterteil 12 randseitig umgeben, gezogen, und der dahingehende Überzug ist dann gemäß der Darstellung nach der Fig. 3 komplementiert. Es werden dann alle Greifelemente geöffnet und anschließend wird gemäß der Darstellung nach der Fig. 4 der weitere Linearantrieb 66 aktiviert und die vier weiteren Arbeitszylinder 68 am U-förmigen Rahmenschenkel 70 angreifend, fahren nach oben aus und nehmen dabei zumindest das Auflageteil 64 nach oben mit. Bei der dahingehenden Aushebebewegung wird das bezogene Sitzteil weiter nach oben bewegt und die zwischenzeitlich in die Freigabestellung bewegten Kopfteile 72 der Greifelemente 14 geraten außer Eingriff mit den zugeordneten Kanälen im Schaumpolsterteil 12, so dass dieses dann kornplementiert vom Auflageteil 64 von Hand oder über eine Handhabungseinheit abgenommen werden kann. Anschließend sind wieder alle Greifelemente 14 geschlossen und die beiden Linearantriebe 60,66 werden eingefahren, so dass die Vorrichtung für einen neuen Bezugsvorgang in ihre Ausgangsstellung nach der Fig. 1 fährt. Ein erneuter Bezugsvorgang kann nunmehr beginnen.

## Patentansprüche

1. Vorrichtung zum Montieren von Sitzbezügen (10) jedweder Art an Schaumpolsterteilen (12) eines Sitzes, insbesondere Fahrzeugsitzes, mit Greifelementen (14), die in Betätigungsgruppen (16, 18, 20, 22, 24) zusammengefaßt der Aufnahme von am Sitzbezug (10) angeordneten Profilleisten (26, 28, 30, 32, 34) dienen und die mittels einer Positioniereinrichtung (42), die eine Relativbewegung zwischen Schaumpolsterteil (12) und dem jeweiligen Greifelement (14) erlaubt, die Profilleisten (16, 18, 20, 22, 24) in kanalartige Ausnehmungen (44, 46, 48, 50, 52) im Schaumpolsterteil (12) ziehen, kann um dergestalt den Sitzbezug (10) am Schaumpolsterteil (12) festzulegen, **dadurch gekennzeichnet, dass** alle Greifelemente (14) von einem gemeinsamen Rahmenteil (58) der Positioniereinrichtung (42) umfasst sind, das in einer linearen Bewegung mittels eines Linearantriebes (60) in der Höhe veränderbar ist, dass die Positioniereinrichtung (42) ein Auflageteil (64) für die Auflage des Schaumpolsterteiles (12) aufweist, die von den Greifelementen (14) in einer abgesenkten Position durchgriffen und in einer angehobenen Stellung von den Greifelementen (14) frei ist, und dass für die Einnahme der einzelnen Positionen des Auflageteiles (64) ein weiterer Linearantrieb (66) dient, der eine überlagerte Bewegung zum ersten Linearantrieb (60) erlaubt.

2. Vorrichtung nach Anspruch 1, **dadurch gekennzeichnet, dass** das jeweilige Greifelement (14) aus einer Greifzange besteht, die zwei relativ zueinander bewegbare Zangenteile (54) aufweist, die mittels eines Antriebes - auch in Form einer Federmechanik - öffen- und schließbar sind.

3. Vorrichtung nach Anspruch 1 oder 2, **dadurch gekennzeichnet, dass** insgesamt zwölf Greifelemente (14) vorhanden sind, von denen die beiden äußersten Längsreihen in Form von je 3 Greifelementen (14) als jeweilige Betätigungsgruppe (16, 18) der Aufnahme der Profilleisten (26, 28) dienen, die den beiden Längsnähten (39) am jeweiligen Sitzteil zugeordnet sind, und dass die dazwischen liegenden Greifelemente (14) paarweise je 3 Betätigungsgruppen (20, 22, 24) definieren, die den drei Quernähten (40) am jeweiligen Sitzteil zugeordnet sind.

4. Vorrichtung nach einem der Ansprüche 1 bis 3, **dadurch gekennzeichnet, dass** die zwei Arten an Linearantrieben (60,66) aus je vier Arbeitszylindern (62 bzw. 68) bestehen, die außenumfangseitig angeordnet, einmal am Rahmenteil (58) angreifen und einmal am Auflageteil (64) der Positioniereinrichtung (42).

5. Vorrichtung nach Anspruch 4, **dadurch gekennzeichnet, dass** die Arbeitszylinder (68) der Positioniereinrichtung (42) für das Auflageteil (64) von den Arbeitszylindern (62), die am Rahmenteil (58) der Positioniereinrichtung (42) angreifen, in der Höhe verfahrbar sind.

6. Vorrichtung nach Anspruch 2 und vorzugsweise auch nach einem der Ansprüche 3 bis 5, **dadurch gekennzeichnet, dass** das jeweilige Greifelement (14) stabartig ausgebildet ist, und an seinem oberen Ende ein Kopfteil (72) für die Aufnahme der jeweiligen Profilleiste (26, 28, 30, 32, 34) des Sitzbezugteils (10) aufweist und an seinem Fußteil (56) ein dritter Linearantrieb angreift, der die Relativbewegung der beiden Zangenteile (54) zueinander erlaubt.

7. Vorrichtung nach Anspruch 6, **dadurch gekennzeichnet, dass** alle Linearantriebe (60, 66) pneumatisch betätigbar sind.

## Claims

1. A device for fitting seat covers (10) of any type on foam cushion parts (12) of a seat, in particular a vehicle seat, comprising gripping elements (14) which, clustered in actuation groups (16, 18, 20, 22, 24), serve to hold profile strips (26, 28, 30, 32, 34) arranged on the seat cover (10), and which by means of a positioning device (42), which allows relative movement between the foam cushion part (12) and the respective gripping element (14), can pull the profile strips (16, 18, 20, 22, 24) into channel-like recesses (44, 46, 48, 50, 52) in the foam cushion part (12) so as to thus fasten the seat cover (10) on the foam cushion part (12), **characterised in that** all of the gripping elements (14) are enclosed by a common frame part (58) of the positioning device (42), the vertical position of which frame part (58) may be changed by linear movement by means of a linear drive (60), that the positioning device (42) has a support part (64) for supporting the foam cushion part (12), gripping elements (14) passing through said positioning device (42) when in a lowered position, and said positioning device (42) being free of the gripping elements (14) when in a raised position, and that a further linear drive (66), which allows movement superimposed on that of the first linear drive (60), serves to place the support part (64) in individual positions.

2. The device according to Claim 1, **characterised in that** the respective gripping element (14) consists of a gripping tong comprising two tong parts (54) moveable relative to one another which can be opened and closed by means of a drive - including in the form of a spring mechanism.

3. The device according to Claim 1 or 2, **characterised in that** there are a total of twelve gripping elements (14) of which the two outermost longitudinal rows, each made up of 3 gripping elements (14), serve as a respective actuation group (16, 18) for holding the profile strips (26, 28) which are associated with the two longitudinal seams (39) on the respective seat part, and that the gripping elements (14) positioned between the seams in pairs define 3 actuation groups (20, 22, 24) which are associated with the three transverse seams (40) on the respective seat part.

4. The device according to any of Claims 1 to 3, **characterised in that** the two types of linear drive (60, 66) each consists of four operating cylinders (62 and 68) which, arranged around the external circumference, in one instance engage the frame part (58), and in the other instance engage the support part (64) of the positioning device (42).

5. The device according to Claim 4, **characterised in that** the operating cylinder (68) of the positioning device (42) for the support part (64) can be displaced vertically by the operating cylinders (62) which engage the frame part (58) of the positioning device (42).

6. The device according to Claim 2, and preferably also according to Claims 3 to 5, **characterised in that** the respective gripping element (14) is configured as a rod, and has on its upper end a head part (72) for holding the respective profile strip (26, 28, 30, 32, 34) of the seat cover part (10), and on its base part (56) engages a third linear drive which allows relative movement of the two tong parts (54) towards each other.

7. The device according to Claim 6, **characterised in that** all of the linear drives (60, 66) can be actuated pneumatically.

## Revendications

1. Dispositif de montage de housses (10) de siège de tout type sur des parties (12) de rembourrage en mousse d'un siège, notamment d'un siège de véhicule, comprenant des éléments (14) de prise, qui, rassemblés en groupes (16, 18, 20, 22, 24) d'actionnement, servent à la réception de baguettes (26, 28, 30, 32, 34) profilées disposées sur la housse (10) de siège et qui, au moyen d'un dispositif (42) de mise en position, qui permet un mouvement relatif entre la partie (12) de rembourrage en mousse et l'élément (14) de prise respectif, peut tirer les baguettes (16, 18, 20, 22, 24) profilées dans des évidements (44, 46, 48, 50, 52) en forme de canal de la partie (12) de rembourrage en mousse et ainsi fixer la housse (10) de siège à la partie (12) de rembourrage en mousse, **caractérisé en ce que** tous les éléments (14) de prise sont entourés d'une partie (58) commune formant cadre du dispositif (42) de mise en position, partie dont la hauteur peut être modifiée suivant un mouvement linéaire à l'aide d'un entraînement (60) linéaire, **en ce que** le dispositif (42) de mise en position comporte une partie (64) d'appui pour l'appui de la partie (12) de rembourrage en mousse, qui est traversée par les éléments (14) de prise en une position abaissée et qui est dégagée des éléments (14) de prise en une position relevée, et **en ce qu'**un autre entraînement (66) linéaire, qui permet un mouvement superposé au premier entraînement (60) linéaire, sert à la prise des diverses positions de la partie (64) d'appui.

2. Dispositif suivant la revendication 1, **caractérisé en ce que** l'élément (14) de prise respectif est constitué d'une pince de prise, qui a deux parties (54) de pince mobiles l'une par rapport à l'autre, qui peuvent être ouvertes et fermées au moyen d'un entraînement également sous la forme d'un mécanisme à ressort.

3. Dispositif suivant la revendication 1 ou 2, **caractérisé en ce qu'**il y a dans l'ensemble douze éléments (14) de prise, dont les deux rangées longitudinales les plus à l'extérieur, sous forme de respectivement 3 éléments (14) de prise, servent, en temps que groupe (16, 18) d'actionnement respectif, à la réception des barrettes (26, 28) profilées associées aux deux coutures (39) longitudinales de la partie de siège respective et **en ce que** les éléments (14) de prise se trouvant entre définissent par paire respectivement 3 groupes (20, 22, 24) d'actionnement, qui sont associés aux trois coutures (40) transversales de la partie de siège respective.

4. Dispositif suivant l'une des revendications 1 à 3, **caractérisé en ce que** les deux types d'entraînement (60, 66) linéaires sont constitués respectivement de quatre cylindres (62 à 68) de travail, qui sont disposés du côté du pourtour extérieur, qui attaquent, d'une part, la partie (58) formant cadre et, d'autre part, la partie (64) d'appui du dispositif (42) de mise en position.

5. Dispositif suivant la revendication 4, **caractérisé en ce que** les cylindres (68) de travail du dispositif (42) de mise en position de la partie (64) d'appui peuvent être déplacés en hauteur par les cylindres (62) de travail, qui attaquent la partie (58) formant cadre du dispositif (42) de mise en position.

6. Dispositif suivant la revendication 2 et, de préférence, également suivant l'une des revendications 3 à 5, **caractérisé en ce que** l'élément (14) de prise respectif est constitué sous la forme d'un barreau et a, à son extrémité supérieure, une partie (72) de tête, pour la réception des barrettes (26, 28, 30, 32, 34) profilées respectives de la partie (10) de housse du siège, et attaque à sa partie (5.6) de pied un troisième entraînement linéaire, qui permet le mouvement relatif des deux parties (54) de pince l'une par rapport à l'autre.

7. Dispositif suivant la revendication 6, **caractérisé en ce que** tous les entraînements (60, 66) linéaires peuvent être actionnés pneumatiquement.
